## (19) Europäisches Patentamt
## European Patent Office
## Office européen des brevets

(11) **EP 1 102 040 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.⁷: **G01D 5/249**, G01D 5/245

(21) Anmeldenummer: **00811007.4**

(22) Anmeldetag: **30.10.2000**

(54) **Positionssensor**

Position sensor

Capteur de position

(84) Benannte Vertragsstaaten:
**CH DE FR LI**

(30) Priorität: **18.11.1999 CH 210499**

(43) Veröffentlichungstag der Anmeldung:
**23.05.2001 Patentblatt 2001/21**

(73) Patentinhaber: **HERA Rotterdam B.V.**
**3062 MA Rotterdam (NL)**

(72) Erfinder:
• **Der Erfinder hat auf seine Nennung verzichtet.**

(74) Vertreter: **Frei, Alexandra Sarah**
**Frei Patentanwaltsbüro,**
**Postfach 768**
**8029 Zürich (CH)**

(56) Entgegenhaltungen:
**EP-A- 0 341 314      EP-A- 0 675 603**
**DE-A- 3 939 353      DE-C- 4 022 503**
**US-A- 4 009 377**

Printed by Jouve, 75001 PARIS (FR)

**Beschreibung**

Die Erfindung liegt auf dem Gebiet der Messgeber, insbesondere der optischen Winkel- und/oder Wegmessgeber, und betrifft ein Verfahren und eine Vorrichtung gemäss den Oberbegriffen der unabhängigen Patentansprüche.

Es sind auf dem Markt Gebersysteme bekannt, welche die absolute Weg- bzw. Winkelverstellung zwischen einem geeigneten Abtastkopf und einer relativ verschobenen Massverkörperung, auf welcher mehrere digitale oder analoge Signalspuren aufgebracht sind, ermitteln und über eine Signal-Auswertelektronik die Werte zur weiteren Verwendung aufbereiten.

In letzter Zeit werden in der Literatur vermehrt Systeme beschrieben, die einen seriellen Absolutcode aufweisen, d. h. in einer Spur aufgebrachte "Bit-Muster". Diese Bitmuster sind meist mit Pseudo Random Codes (PRC's) kodiert und im Grundabstand von 1 Bit bspw. bei optischen Systemen mit mehreren äquidistanten Fotoempfängern (bei 9 Bit z. B. mit 9 Fotodioden) zur Auswertung versehen. Dabei kommt aber auch noch zur weiteren Feinauflösung der absoluten Weg- bzw. Winkelinformation eine parallel angebrachte Inkrementalspur (Grundauflösung wie Absolutwert) in Betracht, mit einer SIN/COS-Signalerzeugung, die entsprechend interpoliert (AD-Wandlung) werden kann und damit höhere Signalauflösung im Wesentlichen mit zwei Spuren ermöglicht. Ein solcher Messgeber ist bspw. in DE-195 18 714.8 beschrieben, welche durch Bezugnahme in die vorliegende Schrift aufgenommen wird.

Unabhängig von der anspruchsvollen Signalverarbeitung sowohl der Absolutwerte als auch der SIN/COS-Signale im Weg- und Winkelgeber selbst können nicht beliebig hohe Auflösungen erreicht werden. Bei weiter steigenden Geschwindigkeiten bzw. Umdrehungszahlen im Anwendungseinsatz (z. B. bei anspruchsvollen Servoantrieben) gelangt man schnell an die Grenzen der derzeitigen Signalverarbeitung in elektronischen Bausteinen (bspw. in anwendungsspezifischen integrierten Schaltkreisen (Application Specific Integrated Circuits, ASIC's), in Mikroprozessoren usw.) und an die Grenzen der Signalübertragung über längere Leitungen (von bspw. einigen Metern Länge). Bei Drehgebern, z. B. mit 6000 U/min und 12-Bit-Auflösung, ergeben sich bereits Verarbeitungsgeschwindigkeiten von annähernd 5 MHz.

Will man den Absolutwert bei einem seriellen Code (siehe DE-195 18 714.8) von bspw. 12 Bit und darüber zweckmässig auswerten, ohne den Elektronik- und Kostenaufwand bei dafür entwickeltem ASIC nicht unzulässig in die Höhe zu treiben, so bietet sich die serielle Austaktung der 12 Diodenwerte (12 Bit) an. Es wird aber sofort ersichtlich, dass sich dann die Auslesezeit = Taktzeit×Bitauflösung = (1/Taktfrequenz)×Bitauflösung erhöht und die permanente Signalauswertung in Echtzeit schnell an die Grenzen im Anwendungseinsatz stößt.

DE 39 39 535 A1 zeigt ein Verfahren und eine Vorrichtung zur Lagemessung unter Verwendung eines seriell überlappenden Codes. Bei diesem kann aus einem an beliebiger Stelle einer Bitfolge des Codes gelegenen Ausschnitt von L aufeinanderfolgenden Bits die absolute Position des Ausschnitts innerhalb des Codes eindeutig bestimmt werden. Bei der Lagemessung ist ein solcher Code auf einen Messkörper angebracht und wird durch Abtastelemente abgetastet. Falls Bewegungsrichtung und -geschwindigkeit bekannt sind, so ist nach Abtastung von L aufeinanderfolgenden Codebits die Position des Messkörpers bestimmbar. Diese Bestimmung geschieht, indem die L Codebits zur Adressierung von Positionswerten in einer gespeicherten Tabelle verwendet werden.

DE 44 22 503 C1 zeigt eine Decodiervorrichtung, um aus Bitfolgen eines detektierten Pseudorandomcodes korrespondierende Postionscodes zu ermitteln. Dabei wird ein zweiter Pseudorandomcode entsprechend einem laufenden Zählerwert erzeugt. Wenn der zweite Pseudorandomcode gleich dem detektierten ist, wird der Zähler gestoppt. Der Wert des Zählers entspricht dem gesuchten Positionscode.

EP 0 341 314 A1 zeigt einen Absolutwertgeber und einen Inkrementalwertgeber mit separaten Spuren auf einer Codierscheibe. Ein Zähler wird anhand eines Wertes entsprechend dem Absolutwertgeber gesetzt und zählt von diesem Wert ausgehen Impulse des Inkrementalwertgebers.

Es ist Aufgabe der Erfindung, ein Verfahren und eine Vorrichtung zur Positionsmessung anzugeben, welche die obigen Nachteile vermeiden. Insbesondere sollen die Auslese- bzw. Auswertzeiten annähernd auf die maximale Taktzeit selbst gebracht werden. Die Aufgabe wird gelöst durch das Verfahren und die Vorrichtung, wie sie in den unabhängigen Patentansprüchen definiert sind.

Die Erfindung basiert auf der Idee einer "Datenkompression" (in gewisser Analogie zu den in der Bildverarbeitung bekannten Verfahren): Sich ändernde, relevante Daten werden - wenn möglich und sinnvoll - erfasst, übermittelt und verwertet; gleichbleibende, redundante Daten werden ignoriert. So wird eine unnötige Redundanz vermindert oder ganz vermieden. Dadurch wird es möglich, die Menge der zu übermittelnden und zu verarbeitenden Daten zu reduzieren.

Dies wird durch das erfindungsgemässe Verfahren erreicht. Demgemäss wird zur Messung der Lage eines Abtastkopfes, welcher mindestens zwei Sensoren beinhaltet, gegenüber einer Massverkörperung, welche einen linearen Code beinhaltet, derart, dass eine vorgegebene Auflösung erreicht wird, von einem Absolutwert einer Ausgangslage mit mindestens der vorgegebenen Auflösung ausgegangen. Während der Messung werden der Abtastkopf und die Massverkörperung relativ zueinander bewegt, und es werden weniger Sensorsignale herangezogen als im Stillstand nötig sind, wobei zum Erreichen der vorgegebenen Auflösung benötigte Information aus Sensorsignalen der Relativbewegung, welche aus dem linearen Code abgeleitet werden, gewonnen wird.

Der erfindungsgemässe Messgeber umfasst einen Abtastkopf, welcher mindestens zwei Sensoren beinhaltet, eine relativ zum Abtastkopf bewegbare Massverkörperung, welche einen linearen Code beinhaltet, und Mittel zur Ermittlung eines Absolutwerts einer Ausgangslage. Weiter umfasst er Mittel zur Gewinnung von Information über die Lage des Abtastkopfes gegenüber der Massverkörperung aus Sensorsignalen der Relativbewegung, welche aus dem linearen Code abgeleitet werden.

Das erfindungsgemässe Verfahren bzw. der erfindungsgemässe Messgeber eignen sich besonders gut für optische Messsysteme; sie sind jedoch auch auf andere Messsysteme übertragbar, z. B. auf magnetische, elektrische und/oder elektrostatische Systeme. Um das Verfahren und den Messgeber im Grundprinzip und in ihrer Wirkung zu erläutern, wird nachfolgend ein optisches System an Beispielen erläutert. In diesen Ausführungsbeispielen werden Photodioden zur Detektion von Licht verwendet; selbstverständlich können auch andere Arten von Fotodetektoren bzw. Fotoempfängern verwendet werden.

Die Erfindung macht sich den Umstand zu Nutze, dass der Linearcode sich an einem Beobachter, z. B. an einer einzelnen Fotodiode, bitweise vorbeibewegt. Wenn man nun das Code-Bildungsgesetz kennt und die Relativbewegung zwischen dem Abtastkopf und der Massverkörperung mindestens die Schrittweite der Bitauflösung für Absolutwerte überschreitet, so kann man den Positionsort fortan bestimmen. So sind z. B. bei einem Absolutgeber mit 12-Bit-PRC (Pseudo Random Code) im Stillstand 12 Fotodioden notwendig, um die Absolutposition zu bestimmen. Bewegt man nun relativ zueinander das Abtastsystem um mindestens diese 12-Bit-Positionen (= Schrittweite der Auflösung), so kann fortan durch den erfinderischen Gedanken auf die Auswertung der im Stillstand notwendigen 12 Fotodioden verzichtet werden und auf die Auswertung nur einer 1-Bit-Fotodiode reduziert werden.

Dies hat markante Vorteile, weil somit nur eine Fotodiode zur Absolutpositionsbestimmung ausreichend ist und somit die Grenzgeschwindigkeit des Gebersystems bis auf die zu verarbeitende Taktfrequenz herangeführt werden kann. Im vorliegend erörterten Beispiel mit 12-Bit-Absolutcode kann dann die Grenzgeschwindigkeit um den Faktor 12 erhöht werden. Dies fällt in der Praxis bei integrierten Fotodioden noch höher aus, da für eine Fotodiode besondere, die Schaltfrequenz erhöhende Massnahmen leicht getroffen werden können. Damit sind nun bei hohen Geschwindigkeiten unter Echtzeitbedingungen die Absolutwerte bestimmbar, so dass die derzeit bei 12-Bit-Absolutdrehgebern zur Messwertübertragung begrenzende Drehzahl von ca. 1000 U/min weit nach oben gelegt werden kann. Für hochauflösende Servosysteme ist dies die gefragte Lösung im Anwendungseinsatz. Somit können dann auch die derzeit im Markt verbreiteten und noch nach aussen zur Auswertelektronik (z. B. Servo-Antriebssteuerung) führenden analogen, störungsempfindlichen SIN/COS-Signalleitungen entfallen, was die Kabelführung (z. T. über lange Strecken) vereinfacht und die Treiber- und Auswertelektronik, (z.B. AD-Wandler, "Sample and Hold"-Verstärker usw.) überflüssig macht. Neben den Kosteneinsparungen wird damit auch eine kabel- und elektronikfreundliche Handhabung der Gebersignale beim Anwender vor Ort ermöglicht.

Die bei Bewegung bzw. Geschwindigkeit hiermit mögliche Reduzierung der Anzahl von Empfängern hat weiterhin den Vorteil, dass z. B. bei optischen Systemen die kontrast-optimale Beleuchtung und die am wenigsten verzerrungsempfindliche Abbildung berücksichtigt werden kann, indem man die in diesem optimalen Bereich befindliche Fotodiode bzw. Fotodioden zur Absolutwertbildung heranzieht. In der Regel ist das ungefähr in der Mitte, z. B. in unserem gewählten optischen System mit 12-Bit-Auswertung die 6. oder 7. Fotodiode. Damit erreicht man nicht nur eine weitere Erhöhung der Grenzgeschwindigkeit; vielmehr wird für höhere Grenzfrequenzen das Beleuchtungssystem, das Justieren und die Signalauswertung im Betrieb viel robuster und unkritischer für lange Betriebseinsätze.

Die Anzahl der zur Messung eingesetzten Fotodioden kann von vornherein auf einem konstanten Wert, bspw. Eins, festgelegt sein. Sie kann aber auch dynamisch variieren. So kann z. B. die Variation einerseits nach einem vordefinierten Programm oder andererseits auch automatisch erfolgen, bspw. in Abhängigkeit von der momentanen Geschwindigkeit. Kleine Geschwindigkeiten erlauben eine höhere Anzahl eingesetzter Fotodioden und umgekehrt. Je höher die absolute Sicherheit in jedem Auflösungsschritt gewünscht wird, um so höher ist die Anzahl der eingesetzten Fotodioden zu wählen. In der Industriepraxis erlaubt aber bereits die eine Fododiode für die Hälfte der Auflösungsschritte pro Umdrehung die redundante Überprüfung des Messgebers, was bereits die sinnvolle Überprüfung weit überschreitet.

Die Absolutposition muss zumindest zu Beginn der Messung einmal ermittelt, bestimmt oder eingelesen werden. Die Bestimmung der Absolutposition bei einem System mit Linearcode kann, wie weiter oben beschrieben, im Stillstand oder bei langsamer Relativgeschwindigkeit zwischen Abtastkopf und Massverkörperung von der Vorrichtung selbst mit einer Vielzahl von Fotodioden entsprechend der nötigen Auflösung - z. B. 12 Fotodioden für eine 12-Bit-Auflösung - erfolgen. Unter "langsamer Relativgeschwindigkeit" ist hier eine Relativgeschwindigkeit zu verstehen, bei welcher bei der Signalverarbeitung und Signalübertragung in voller Auflösung die einleitend erwähnten Probleme nicht auftreten.

Als Alternative dazu bietet sich die folgende Variante des erfindungsgemässen Verfahrens an. Bei Inbetriebnahme kann stets eine kleine Relativbewegung des Messsystems erfolgen. Bei einem Drehgeber mit bspw. 12-Bit-Auflösung sind pro Umdrehung 4096 Schritte vorhanden, die lediglich um ≥ 11 Bit-Schritte zu bewegen sind, was einem Winkel von ca. 1° entspricht. Allgemein müssen gemäss dieser Ausführungsform zur Bestimmung des Absolutwerts der Ausgangslage der Abtastkopf und die Massverkörperung um mindestens

$$\Delta L \geq (N - n) \cdot \frac{L}{2^N} \, ,$$

worin N die Auflösung in Bit, n die Anzahl von herangezogenen Sensoren und L die Codelänge bedeuten, relativ zueinander bewegt werden.

Zusätzlich kann man solche vereinfachten Systeme auch dort anwenden, wo nach dem Ausschalten des Messsystems keine Relativbewegung zwischen Abtastkopf und Massverkörperung mehr erfolgt und der letzte Absolutwert im Gesamtsystem (oder im Geber) gespeichert wird. Batteriebetriebene Systeme sind besonders für diese vereinfachte Sensorauswertung geeignet, da praktisch keine Spannungsunterbrechung mehr im Einsatz erfolgt.

Die Absolutposition kann auch von aussen, bspw. von einem anderen Messsystem, übernommen werden.

Es ist zweckmässig, mindestens einen festen Vergleich von PRC-Werten während einer Umdrehung (Anfang bis Ende des Linearcodes) zum Positionsvergleich und zur Positionssetzung heranzuziehen. Ein Zähler kann bspw. mindestens einmal während der Umdrehung auf Null oder einen bestimmten Wert gesetzt werden. Damit wird das System sehr störunempfindlich und synchronisiert sich selbst bei evtl. auftretenden Störungen.

Dieser Gesichtspunkt spricht zusätzlich für die Realisierung der Absolutwertbildung im gesamten Geschwindigkeitsbereich in einem Auswertsystem im Geber selbst, da nur so die permanente Synchronität gewährleistet wird. In Systemen mit Absolutwertbildung allein im Stillstand bzw. niederer Geschwindigkeit und sonst über SIN/COS-Signale bei dem vom Geber getrennten Steuersystem ist das nicht durchgängig gewährleistet und kann zu grossen Folgeschäden in Störungsfällen führen. Dies ist besonders kritisch bei Maschinen im Dauerbetrieb (z. B. über eine oder mehrere Arbeitsschichten) und bei der störbehafteten Industrieumgebung der Steuerungen.

Es sind verschiedene Methoden der Absolutwertbildung möglich, die stets die Aufgabe haben, den Linearcode (z. B. PRC) in einen für die Digitalsignalverarbeitung üblichen Binärcode (2er-System) zu wandeln. Entweder macht man das direkt über bekannte Algorithmen, über Look-up-table-Verfahren, oder auf indirektem Weg mittels Zähler und Vergleicher.

Die Multiturn-Anwendung über Zählen der "Abschnitte"/Umdrehungen ist dank der vorliegenden Erfindung direkt möglich, so dass die üblichen separaten Umdrehungszähler (Zahnräder, Reed-Kontakte bzw. separate Magnete bzw. magnetoresistive Systeme usw.) entfallen können. Die richtungsabhängigen Umdrehungen können also in Echtzeit gespeichert werden. Die erfindungsgemässe Vorrichtung liefert ein Signal für die absolute Lage und die Anzahl Umdrehungen bei voller Geschwindigkeit, ohne dass eine separate Nullspur nötig wäre.

Im folgenden wird die Erfindung anhand von Figuren detailliert erläutert. Dabei zeigen schematisch:

Fig. 1    einen Teil eines optischen Messgebers,

Fig. 2    Teile eines Pseudo Random Codes in einem Beobachtungsfenster von 12 Bit in verschiedenen Positionen,

Fig. 3    Teile eines Pseudo Random Codes mit Auswertung gemäss Stand der Technik,

Fig. 4    Teile eines Pseudo Random Codes mit erfindungsgemässer Auswertung,

Fig. 5    einen erfindungsgemässen Messgeber und

Fig. 6    ein Blockdiagramm eines erfindungsgemässen Messgebers.

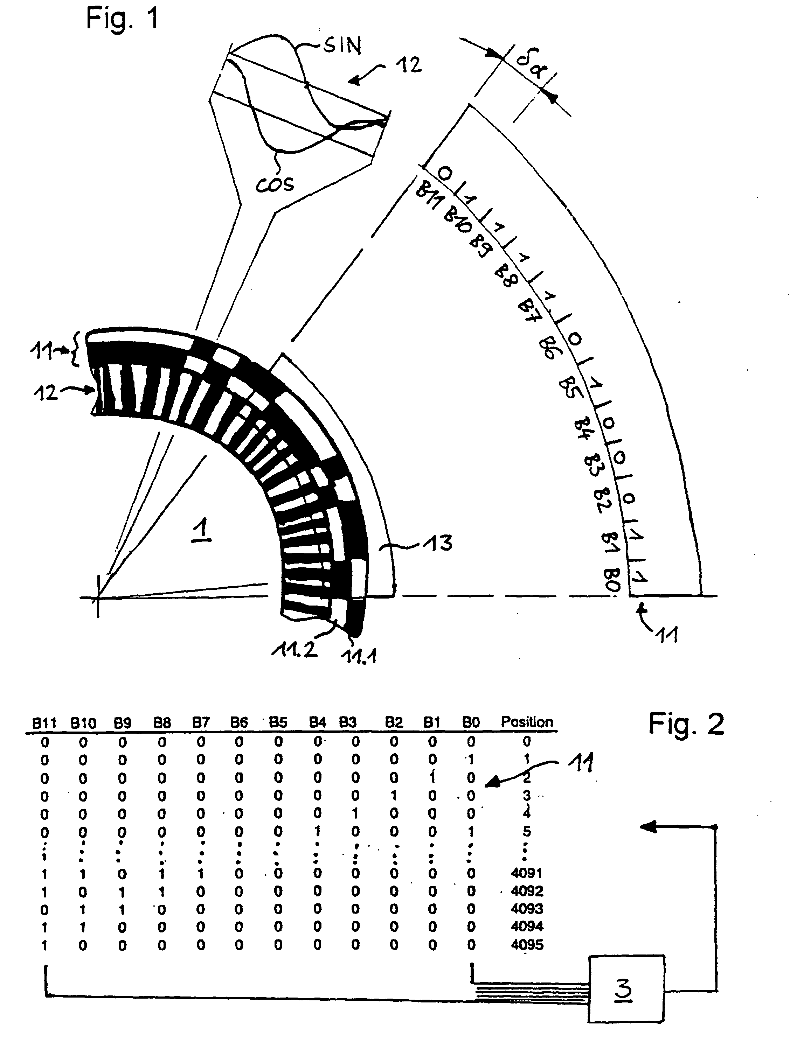

**Figur 1** zeigt einen Teil eines optischen Drehgebers, welcher bspw. gemäss DE-195 18 714.8 verwendet wird, welcher aber auch gemäss der vorliegenden Erfindung verwendet werden kann. Auf einer (nicht näher dargestellten) Massverkörperung 1 ist ein serieller bzw. linearer Binärcode 11, bspw. ein Pseudo-Random-Code (PRC), aufgebracht. Der Linearcode 11 kann bspw. als eine Folge von lichtdurchlässigen und lichtundurchlässigen Bereichen (schematisch als 1 bzw. 0 darstellbar) auf einer (nicht näher dargestellten) Glasscheibe 1 realisiert sein. Jede 1 bzw. 0 stellt ein Bit des Linearcodes dar. Zum Zweck der bewährten Differenz-Signalbildung werden vorzugsweise zwei Codespuren 11.1, 11.2 angebracht, welche denselben Code beinhalten, aber zueinander invers sind (wenn "1" auf erster Codespur 11.1, dann "0" auf zweiter Codespur 11.2 und umgekehrt). Die gesamte Abschnittslänge (hier bspw. 360°) des linearen Codes 11 ist gemäss einer vorgegebenen Auflösung (bspw. 12 Bit) in Grobschritte der Länge δα (bspw. $\delta\alpha = 360°/2^{12} \approx 0.09°$) unterteilt. Ein Teil 13 der Massverkörperung 1 wird auf (nicht näher dargestellte) Sensoren bzw. Detektoren auf einem (nicht näher dargestellten) Abtastkopf abgebildet, oder die Sensoren empfangen den direkten Schattenwurf des auszulesenden Teils 13 der Massverkörperung 1. Der Abtastkopf enthält bspw. 12 Fotodioden, welche im wesentlichen in einer Zeile nebeneinander angeordnet sind und deren gegenseitiger Abstand (unter Berücksichtigung eines entsprechenden Abbildungsmassstabs) der Grobschrittlänge δα entspricht. Das so
gebildete 12-Bit-Beobachtungsfenster hat also eine
Länge von bspw. 12δα (≈ 1°). Wie in der DE-195 18
714.8 beschrieben, kann zwecks Feinauflösung auf der
Massverkörperung 1 nebst dem Binärcode auch eine Inkrementalspur 12 (SIN/COS-Signal) aufgebracht sein.

Teile eines Pseudo-Random-Codes 11 in einem Beobachtungsfenster von 12 Bit B0, B1, ..., B11 in
verschiedenen Positionen 0, 1, ..., 4095 sind in **Figur 2**
aufgelistet. Die Signale B0, B1, ..., B11 der 12 Fotodioden werden zusammen in einer Logik-Auswerteinheit 3 ausgewertet. Aus den 12 Bitsignalen kann eindeutig auf die jeweilige Position 0, 1, ..., 4095 geschlossen werden.

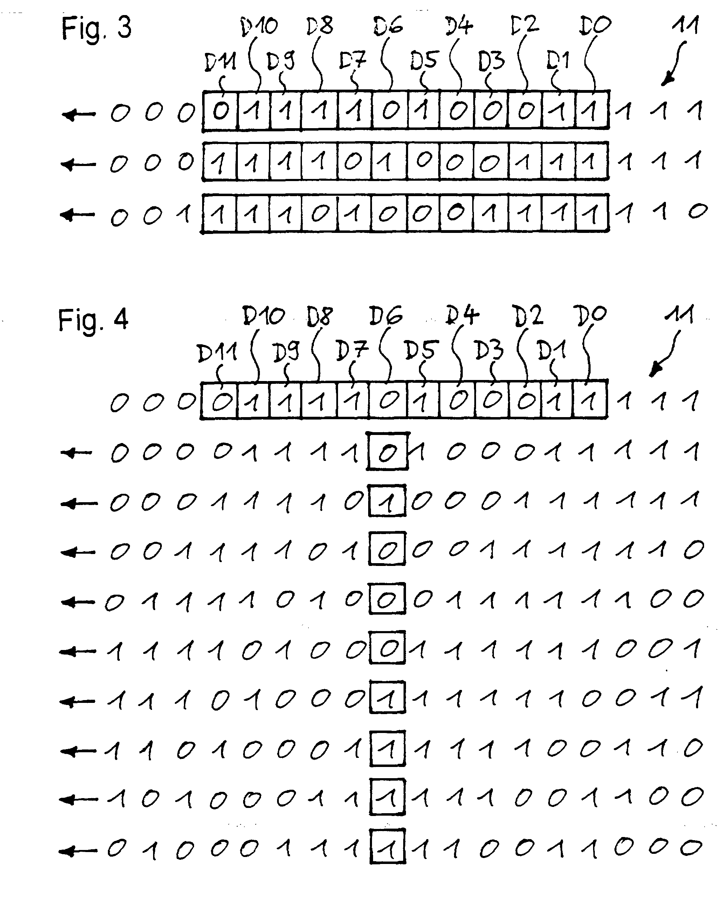

Ein Teil eines Pseudo-Random-Codes 11, welcher sich in drei aufeinanderfolgenden Schritten in Richtung der Pfeile an 12 Fotodioden D0, D1, ..., D11 vorbei
bewegt, ist in **Figur 3** dargestellt. Bei einem Messverfahren gemäss Stand der Technik, wie in Fig. 3, werden
in jedem Schritt alle 12 Fotodioden D0, D1, ..., D11 benötigt, um die Position zu bestimmen. Wenn sich die
Massverkörperung 1 relativ zum Abtastkopf um ein Bit
bewegt, so fällt auf, dass bloss ein neues Bit (neues B0)
hinzukommt und ein bekanntes Bit (altes B11) verschwindet, während die übrigen 11 Bits (alte B0-B10)
unverändert bleiben. Diese 11 unveränderten Bits stellen somit redundante Information dar.

Die Erfindung verzichtet - zumindest teilweise
- auf diese redundante Information, wie in **Figur 4** gezeigt wird. Zunächst kann es zwar nötig sein, alle 12 Fotodioden D0, D1, ..., D11 zu verwenden, um im Stillstand
den Absolutwert der Ausgangslage festzustellen. Bei
der eigentlichen Messung werden jedoch nicht mehr alle 12, sondern weniger Fotodioden gebraucht - z. B. eine einzige Fotodiode D6, welche sich vorzugsweise in
der Mitte der Fotodiodenzeile D0, D1, ..., D11 befindet
und deshalb im folgenden "Mittenbit"-Fotodiode genannt wird. Diese einzige Mittenbit-Fotodiode
D6genügt, um ausreichend relevante Information über
den Absolutwert der gegenseitigen Lage von Massverkörperung 1 und Abtastkopf zu liefern.

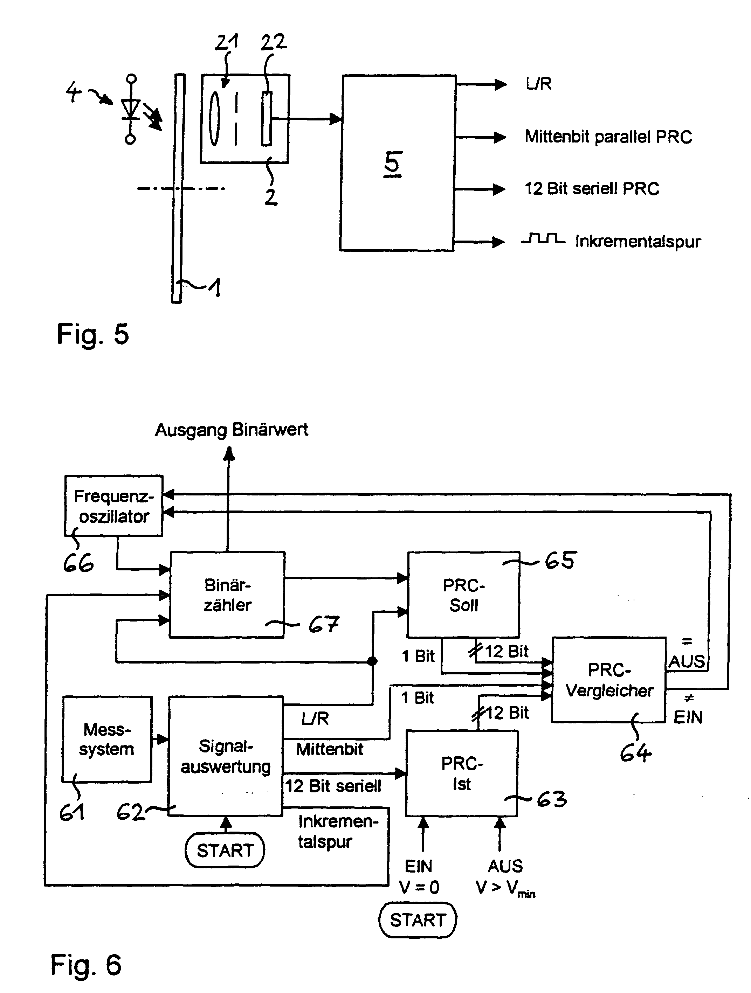

In **Figur 5** wird eine bevorzugte Ausführungsform der Erfindung näher beschrieben. Das darin vorhandene optische Messsystem umfasst eine als optische Geberscheibe ausgebildete Massverkörperung 1
und einen Abtastkopf 2. Die Geberscheibe 1 ist bspw.
als Glasscheibe mit Chrom-Codierung ausgebildet und
hat im wesentlichen zwei (nicht dargestellte) Massverkörperungsspuren:

• PRC-Absolutspur und
• Inkrementalspur (SIN/COS-Signal).

Der Abtastkopf 2 beinhaltet eine Abbildungsoptik 21 und ein für die Signalbildung vorhandenes und
integriertes Fotoempfänger-Schaltungs-ASIC 22 (siehe
DE-195 18 714.8). Darin werden aus der Inkrementalspur SIN/COS-Signale gebildet - jeweils zwischen einem Bit Absolutauflösung - und auch die 12 Fotodioden
mit einer speziell beschalteten "Mittenbit-Fotodiode" (z.
B. die siebte Fotodiode) zur Signalauswertung aufbereitet. Als Lichtquelle dient z. B. eine Leuchtdiode 4.

Aus einer Signalauswerteinheit 5 sind die Ausgangssignale für Inkrement-Bildung, Links-/Rechts-Bewegung, Mittenbit-(Parallel-PRC-)Wert und 12-Bit-Seriell-(PRC-)Wert herausgeführt, die in nachstehender
Funktionsverknüpfung zur Absolutwertbildung im Binär-Code herangezogen werden.

Anhand des Blockdiagramms von **Figur 6** wird
die Funktionsweise des Messgebers von Fig. 5 erläutert. Nach dem "Start" des Systems, das sich zu einem
Anfangszeitpunkt im Stillstand befindet, wird vom
Messsystem 61 über die Signalauswertung 62 der
12-Bit-Absolutwert über den Kanal "12-Bit-Seriell" an einen Zähler PRC-Ist 63 übertragen. Der als Schieberegister ausgestaltete Zähler PRC-Ist liefert am Ausgang
den 12-Bit-Absolutwert zu einem PRC-Soll/Ist-Vergleicher 64.

Von einem "PRC-Soll" 65 liegt zu diesem Zeitpunkt kein bzw. ein abweichender Absolutwert vor, so
dass der Vergleicher 64 einen Frequenzoszillator 66 aktiviert, der wiederum einen Binär-Zähler 67 startet. Dieser fängt an von "Null" (Ausgangspunkt) zu zählen (mit
einer hohen Oszillatorfrequenz) und bildet über das Bildungsgesetz den PRC-Soll-Wert 65, der auch den als
Schieberegister ausgebildeten Zähler aufweist. Der Binär-Zähler 67 zählt so lange hoch, bis der PRC-Soll-
Wert 65 und der PRC-Ist-Wert 63 an den 12-Bit-Absolutwerten am PRC-Vergleicher 64 gleich sind. Dann wird
der Frequenz-Oszillator 66 über den PRC-Vergleicher
64 gestoppt. Der zu diesem Zeitpunkt dann anstehende
12-Bit-Absolutwert (der Binärzähler 67 ist ebenfalls als
ein als Schieberegister ausgestalteter Zähler ausgeführt) ist der dem PRC-Ist-Wert 63 entsprechende Binärwert, der zur Weiterverarbeitung an eine digitale
Steuerelektronik ausgegeben wird.

Wenn nun durch Relativbewegung zwischen
dem Abtastkopf 2 und der Massverkörperung 1 das
Messsystem über die eingeschaltete Signalauswertung
62 über die Inkrementalspur ein Takt-Signal am Binär-
Zähler 67 anliegt, wird über den um einen Schritt hochgezählten Zählerstand drehrichtungsgerecht das Signal
L/R am Ausgang der Signalauswertung 62 zur
PRC-Soll-Wertbildung über das besprochene Bildungsgesetz herangezogen. Gleichzeitig steht am Ausgang
der Signalauswertung 62 an "Mittenbit" der 1-Bit-Absolutwert positionsgerecht an (codiert auch in PRC durch
den Linear-Code, z. B. der Scheibe 1 eines Drehgebers).

Der PRC-Vergleicher Soll/Ist 64 vergleicht nun
am Eingang die jeweils 1-Bit-Werte vom PRC-Soll 65
und "Mittenbit" der Signalauswertung, die übereinstimmen müssen. Daher steht am Ausgang des Binär-Zählers 67 folgerichtig der richtige 12-Bit-Binärwert zur Weiterverarbeitung bereit. Stellt der PRC-Vergleicher 64 "≠" fest, wird der Frequenzoszillator 66 aktiviert, der den Binär-Zähler 67 sehr schnell und L/R-abhängig bis zu demjenigen Positionspunkt bringt, bei dem der PRC-Vergleicher 64 "=" meldet. Dann hat der Binär-Zähler 67 den richtigen Absolutwert als Binärwert zur Ausgabe.

Mittels der "Taktung" des oben beschriebenen Sensors wird ein stromsparender Betrieb des Gebers ermöglicht, so dass ein wirkungsvoller Batteriebetrieb stattfinden kann. Da der Gesamtabsolutwert während einer Umdrehung stets vorhanden ist, braucht das Messsystem nur mindestens einmal während der Umdrehung kurz eingeschaltet werden.

**Patentansprüche**

1. Verfahren, vorzugsweise in einem optischen Messgeber, zur Messung der Lage eines Abtastkopfes (2), welcher mindestens zwei Sensoren (D0-D11) beinhaltet, gegenüber einer Massverkörperung (1), welche einen linearen Code (11) beinhaltet, derart, dass eine vorgegebene Auflösung erreicht wird, wobei von einem Absolutwert einer Ausgangslage mit mindestens der vorgegebenen Auflösung ausgegangen wird, **dadurch gekennzeichnet, dass** während der Messung der Abtastkopf (2) und die Massverkörperung (1) relativ zueinander bewegt werden und Sensorsignale (B6) von weniger Sensoren (D6) herangezogen werden als im Stillstand nötig sind, wobei zum Erreichen der vorgegebenen Auflösung benötigte Information aus Sensorsignalen (B6), welche durch die Relativbewegung verursacht und aus dem linearen Code (11) abgeleitet werden, gewonnen wird.

2. Verfahren nach Anspruch 1, wobei während der Messung genau ein Sensor (D6) herangezogen wird.

3. Verfahren nach Anspruch 1 oder 2, wobei der mindestens eine zur Messung herangezogene Sensor (D6) aus einem mittleren Bereich des Abtastkopfes (2) gewählt wird.

4. Verfahren nach einem der Ansprüche 1-3, wobei während der Messung Sensoren (D0-D11) nach Bedarf zu- oder weggeschaltet werden.

5. Verfahren nach einem der Ansprüche 1-4, wobei der Absolutwert der Ausgangslage bestimmt wird, indem im Stillstand oder bei langsamer Relativgeschwindigkeit alle im Abtastkopf (2) vorhandenen Sensoren (D0-D11) zur Messung herangezogen werden.

6. Verfahren nach einem der Ansprüche 1-4, wobei der Absolutwert der Ausgangslage bestimmt wird, indem weniger Sensoren (D6) zur Messung herangezogen werden als zum Erreichen der vorgegebenen Auflösung nötig wären, der Abtastkopf (2) und die Massverkörperung (1) jedoch um mindestens

$$\Delta L \geq (N - n)\cdot\frac{L}{2^N},$$

worin N die Auflösung in Bit, n die Anzahl von herangezogenen Sensoren und L die Codelänge bedeuten, relativ zueinander bewegt werden und zum Erreichen der vorgegebenen Auflösung benötigte Information aus Sensorsignalen (B6) der Relativbewegung, welche aus dem linearen Code (11) abgeleitet werden, gewonnen wird.

7. Verfahren nach einem der Ansprüche 1-4, wobei der Absolutwert der Ausgangslage aus einer früheren Messung gespeichert vorliegt oder von aussen vorgegeben wird.

8. Verfahren nach einem der Ansprüche 1-7, wobei als linearer Code (11) ein Pseudo-Random-Code verwendet wird.

9. Verfahren nach Anspruch 8, wobei die Abschnittslänge des Pseudo-Random-Codes richtungsabhängig zur Absolutpositionsbestimmung gezählt wird.

10. Verfahren nach einem der Ansprüche 1-9, wobei eine Messwert-Elektronik bei Relativbewegung des Abtastkopfes (2) zur Massverkörperung (1) mindestens einmal für die Mess-Auswertzeit nach Überschreitung der gesamten Abschnittslänge des linearen Codes (11) eingeschaltet wird.

11. Verfahren nach einem der Ansprüche 1-10, wobei die Anzahl überschrittener Abschnittslängen des linearen Codes (11) gespeichert wird.

12. Verfahren nach einem der Ansprüche 1-11, wobei zwecks Feinauflösung zusätzlich zum linearen Code (11) mindestens ein Inkrementalcode (12) zur Messung herangezogen wird.

13. Messgeber, vorzugsweise optischer Messgeber, umfassend einen Abtastkopf (2), welcher mindestens zwei Sensoren (D0-D11) beinhaltet, eine relativ zum Abtastkopf (2) bewegbare Massverkörperung (1), welche einen linearen Code (11) beinhaltet, und Mittel zur Ermittlung eines Absolutwerts einer Ausgangslage, **gekennzeichnet durch** Mittel (3) zur Gewinnung von Information über die Lage des Abtastkopfes (2) gegenüber der Massverkörperung (1) aus Sensorsignalen (B6) welche **durch** die Relativbewegung verursacht und aus dem linearen Code (11) abgeleitet werden, unter Verwendung von Sensorsignalen (B6) von weniger Sensoren (D6) als das Mittel zur Ermittlung des Absolutwerts verwendet.

**14.** Messgeber nach Anspruch 13, wobei die Mittel (3) zur Gewinnung der Lageinformation derart gestaltet sind, dass die Lageinformation aus genau einem Sensorsignal (B6) gewinnbar ist.

**15.** Messgeber nach Anspruch 13 oder 14, wobei sich der mindestens eine Sensor (D6) im mittleren Bereich des Abtastkopfes (2) befindet.

**16.** Messgeber nach einem der Ansprüche 13-15, wobei der mindestens eine Sensor (D0-D11) als Fotodiode ausgebildet ist.

**17.** Messgeber nach einem der Ansprüche 13-16, wobei die Mittel zur Ermittlung eines Absolutwerts einer Ausgangslage Mittel zum Bestimmen, Mittel zum 5 Speichern und/oder Mittel zum Übernehmen des Absolutwerts von aussen beinhalten.

**18.** Messgeber nach einem der Ansprüche 13-17, wobei der linearer Code (11) ein Pseudo-Random-Code ist.

**19.** Messgeber nach einem der Ansprüche 13-18, beinhaltend Mittel zur 10 Speicherung der Anzahl überschrittener Abschnittslängen des linearen Codes.

**20.** Messgeber nach einem der Ansprüche 13-19, wobei die Massverkörperung (1) zwecks Feinauflösung zusätzlich zum linearen Code (11) mindestens einen Inkrementalcode (12) beinhaltet.

**Claims**

**1.** Method, preferably in an optical measurement transducer, for measuring the position of a sensing head (2), which contains at least two sensors (D0-D11), with respect to an embodiment of a scale (1) which contains a linear code (11), in such a way that a predefined resolution is achieved starting with an absolute value of an initial position at at least the predefined resolution, **characterized in that** during the measurement, the sensing head (2) and the embodiment of the scale (1) are moved relative to each other and sensor signals (B6) of less sensors (D6) are used than are needed at a standstill, information needed to achieve the predefined resolution being obtained from sensor signals (B6) caused by the relative movement and derived from the linear code (11).

**2.** Method according to Claim 1, precisely one sensor (D6) being used during the measurement.

**3.** Method according to Claim 1 or 2, the at least one sensor (D6) used for the measurement being chosen from a central area of the sensing head (2).

**4.** Method according to one of Claims 1 - 3, sensors (D0-D11) being switched in or out as required during the measurement.

**5.** Method according to one of Claims 1 - 4, the absolute value of the initial position being determined by all the sensors (D0-D11) in the sensing head (2) being used for the measurement at a standstill or at a slow relative speed.

**6.** Method according to one of Claims 1 - 4, the absolute value of the initial position being determined by fewer sensors (D6) being used for the measurement than would be needed to achieve the predefined resolution, but the sensing head (2) and the embodiment of the scale (1) being moved relative to each other by at least

$$\Delta L \geq (N - n) \cdot \frac{L}{2^N},$$

where N is the resolution in bits, n is the number of sensors used and L is the code length, and information needed to achieve the predefined resolution being obtained from sensor signals (B6) of the relative movement, which are derived from the linear code (11).

**7.** Method according to one of Claims 1 - 4, the absolute value of the initial position being stored from an earlier measurement or predefined from the outside.

**8.** Method according to one of Claims 1 - 7, the linear code (11) used being a pseudo-random code.

**9.** Method according to Claim 8, the sectional length of the pseudo-random code being counted as a function of direction to determine the absolute position.

**10.** Method according to one of Claims 1 - 9, measured value electronics being switched on at least once for the measurement evaluation period after the entire sectional length of the linear code (11) has been swept over.

**11.** Method according to one of Claims 1 - 10, the number of sectional lengths of the linear code (11) that have been swept over being stored.

**12.** Method according to one of Claims 1 - 11, at least one incremental code (12) being used in addition to the linear code (11) for the measurement, for the purpose of fine resolution.

**13.** Measurement transducer, preferably optical measurement transducer, comprising a sensing head (2) which contains at least two sensors (D0-D11), an embodiment of a scale (1) which can be moved relative to the sensing head (2) and which contains a linear code (11), and means for determining an absolute value of an initial position, **characterized by** means (3) for obtaining information about the position of the sensing head (2) with respect to the embodiment of the scale (1) from sensor signals (B6) caused by relative movement and derived from the linear code (11), using sensor signals (B6) from less sensors (D6) than the means for determination of the absolute value uses.

**14.** Measurement transducer according to Claim 13, the means (3) for obtaining the position information being configured such that the position information can be obtained from precisely one sensor signal (B6).

**15.** Measurement transducer according to Claim 13 or 14, the at least one sensor (D6) being located in the central area of the sensing head (2).

**16.** Measurement transducer according to one of Claims 13 - 15, the at least one sensor (D0-D11) being designed as a photodiode.

**17.** Measurement transducer according to one of Claims 13 - 16, the means for determining an absolute value of an initial position containing means for determining, means for storing and/or means for accepting the absolute value from outside.

**18.** Measurement transducer according to one of Claims 13 - 17, the linear code (11) being a pseudo-random code.

**19.** Measurement transducer according to one of Claims 13 - 18, containing means for storing the number of sectional lengths of the linear code that are swept over.

**20.** Measurement transducer according to one of Claims 13 - 19, the embodiment of the scale (1) containing at least one incremental code (12) in addition to the linear code (11), for the purpose of fine resolution.

**Revendications**

**1.** Procédé, de préférence dans un capteur de mesure optique, pour la mesure de la position d'une tête de palpage (2) qui contient au moins deux détecteurs (D0-D11) par rapport à un corps massique (1) qui contient un code linéaire (11) de telle sorte que l'on atteigne une résolution prédéterminée, dans lequel on part d'une valeur absolue d'une position initiale qui présente au moins la résolution prédéterminée, **caractérisé en ce que** pendant la mesure, la tête de palpage (2) et le corps massique (1) sont déplacés l'un par rapport à l'autre et **en ce que** des signaux de capteurs (B6) concernés proviennent d'un plus petit nombre de capteurs (D6) que ce qui est nécessaire à l'arrêt, l'information nécessaire pour atteindre la résolution prédéterminée étant obtenue à partir des signaux de capteurs (B6) qui sont provoqués par le déplacement relatif et dérivés du code linéaire (11).

**2.** Procédé selon la revendication 1, dans lequel, pendant la mesure, exactement un capteur (D6) est concerné.

**3.** Procédé selon les revendications 1 ou 2, dans lequel au moins un capteur (D6) concerné par la mesure est sélectionné dans une plage centrale de la tête de palpage (2).

**4.** Procédé selon l'une des revendications 1 à 3, dans lequel des capteurs (D0-D11) sont branchés ou débranchés pendant la mesure suivant les besoins.

**5.** Procédé selon l'une des revendications 1 à 4, dans lequel la valeur absolue de la position de départ est déterminée en impliquant tous les capteurs (D0-D11) présents dans la tête de palpage (2) dans la mesure à l'arrêt ou à vitesse relative lente.

**6.** Procédé selon l'une des revendications 1 à 4, dans lequel la valeur absolue de la position de départ est déterminée en impliquant dans la mesure un nombre de capteurs (D6) plus petit que celui qui serait nécessaire pour obtenir la résolution prédéterminée, la tête de palpage (2) et le corps massique (1) étant cependant déplacés l'un par rapport à l'autre d'au moins

$$\Delta L \geq (N - n) \, . \, (L/2^N)$$

dans laquelle N représente la résolution en bits, n le nombre de capteurs concernés et L la longueur du code, et en ce que les informations nécessaires pour atteindre la résolution prédéterminée sont obtenues à partir de signaux de capteurs (B6) du déplacement relatif qui sont dérivés du code linéaire (11).

**7.** Procédé selon l'une des revendications 1 à 4, dans lequel la valeur absolue de la position de départ provient d'une mesure antérieure conservée en mémoire ou est prédéterminée depuis l'extérieur.

**8.** Procédé selon l'une des revendications 1 à 7, dans lequel on utilise comme code linéaire (11) un code pseudo-aléatoire.

**9.** Procédé selon la revendication 8, dans lequel la longueur de segment du code pseudo-aléatoire est sélectionnée en fonction de la direction pour déterminer une position absolue.

**10.** Procédé selon l'une des revendications 1 à 9, dans lequel une électronique de valeur de mesure est branchée lors du déplacement de la tête de palpage (2) par rapport au corps massique (1) au moins une fois pendant la durée d'évaluation de mesure après que la longueur totale du segment du code linéaire (11) a été dépassée.

**11.** Procédé selon l'une des revendications 1 à 10, dans lequel le nombre de longueurs de segment du code linéaire (11) qui ont été dépassées est conservé en mémoire.

**12.** Procédé selon l'une des revendications 1 à 11, dans lequel, pour une résolution fine, on applique dans la mesure au moins un code d'incrément (12) en plus du code linéaire (11).

**13.** Capteur de mesure, de préférence capteur de mesure optique, qui comprend une tête de palpage (2) qui contient au moins deux capteurs (D0-D11), un corps massique (11) apte à être déplacé par rapport à la tête de palpage (2) et qui contient un code linéaire (11) et des moyens de détermination d'une valeur absolue d'une position de départ, **caractérisé par** des moyens (3) qui permettent d'obtenir des informations sur la position de la tête de palpage (2) par rapport au corps massique (1) à partir de signaux de capteur (B6) qui sont provoqués par le déplacement relatif et qui sont dérivés du code linéaire (11), en recourant à des signaux (D6) d'un nombre de capteurs (D6) plus petit que celui qu'utilise le moyen de détermination de la valeur absolue.

**14.** Capteur de mesure selon la revendication 13, dans lequel les moyens (3) d'obtention d'informations de position sont configurés de telles sorte que les informations de position peuvent être obtenues exactement d'un signal de capteur (B6).

**15.** Capteur de mesure selon les revendications 13 ou 14, dans lequel au moins un capteur (D6) se trouve dans la zone centrale de la tête de palpage (2).

**16.** Capteur de mesure selon l'une des revendications 13 à 14, dans lequel au moins un capteur (D0-D11) est configuré comme photodiode.

**17.** Capteur de mesure selon l'une des revendications 13 à 16, dans lequel les moyens de détermination d'une valeur absolue d'une position initiale contiennent des moyens de détermination, des moyens de mise en mémoire et/ou des moyens de reprise de la valeur absolue à l'extérieur.

**18.** Capteur de mesure selon l'une des revendications 13 à 17, dans lequel le code linéaire (11) est un code pseudo-aléatoire.

**19.** Capteur de mesure selon l'une des revendications 13 à 18, qui contient des moyens pour conserver en mémoire le nombre de longueurs de segment du code linéaire qui ont été dépassées.

**20.** Capteur de mesure selon l'une des revendications 13 à 19, dans lequel le corps massique (1) contient au moins un code incrémentiel (12) en plus du code linéaire (11) pour permettre une résolution fine.

## Fig. 1

## Fig. 2

| B11 | B10 | B9 | B8 | B7 | B6 | B5 | B4 | B3 | B2 | B1 | B0 | Position |
|-----|-----|-----|-----|-----|-----|-----|-----|-----|-----|-----|-----|----------|
| 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 1 | 1 |
| 0 | 0 | 0 | 0 | 0 | 0 | 0 | 0 | 0 | 0 | 1 | 0 | 2 |
| 0 | 0 | 0 | 0 | 0 | 0 | 0 | 0 | 0 | 1 | 0 | 0 | 3 |
| 0 | 0 | 0 | 0 | 0 | 0 | 0 | 0 | 1 | 0 | 0 | 0 | 4 |
| 0 | 0 | 0 | 0 | 0 | 0 | 0 | 1 | 0 | 0 | 0 | 1 | 5 |
| : | : | : | : | : | : | : | : | : | : | : | : | : |
| 1 | 1 | 0 | 1 | 1 | 0 | 0 | 0 | 0 | 0 | 0 | 0 | 4091 |
| 1 | 0 | 1 | 1 | 0 | 0 | 0 | 0 | 0 | 0 | 0 | 0 | 4092 |
| 0 | 1 | 1 | 0 | 0 | 0 | 0 | 0 | 0 | 0 | 0 | 0 | 4093 |
| 1 | 1 | 0 | 0 | 0 | 0 | 0 | 0 | 0 | 0 | 0 | 0 | 4094 |
| 1 | 0 | 0 | 0 | 0 | 0 | 0 | 0 | 0 | 0 | 0 | 0 | 4095 |

Fig. 3

Fig. 4

Fig. 5

Fig. 6